# EUROPÄISCHE PATENTSCHRIFT

(11) **EP 0 892 291 B1**
(45) Veröffentlichungstag und Bekanntmachung des Hinweises auf die Patenterteilung: **23.03.2005**
(21) Anmeldenummer: 98100958.2
(22) Anmeldetag: 21.01.1998
(51) Int. Cl.: G02B 6/38

(54) **Optischer Wellenleiter mit einer harten dünnen Schicht**
Optical waveguide with a hard thin layer
Guide d'onde optique ayant une couche mince dure

(30) Priorität: 27.03.1997 DE 19712950
(43) Veröffentlichungstag der Anmeldung: 20.01.1999
(73) Patentinhaber: Deutsche Telekom AG, 53113 Bonn (DE)
(72) Erfinder: Heitmann, Walter, Dr., 64401 Gross-Bieberau (DE)

(56) Entgegenhaltungen:
- EP-A- 0 058 461
- US-A- 4 602 847
- RICHTER F: 'Superharte dünne Schichten' PHYSIKALISCHE BLAETTER Bd. 52, Nr. 4, April 1996, Seiten 355 - 358, XP002109022
- HENKING R ET AL: "Ion-beam-sputtering: a deposition process for laser components of the future" LASER UND OPTOELEKTRONIK, APRIL 1996, AT-FACHVERLAG, GERMANY, Bd. 28, Nr. 2, Seiten 43-49, XP002109023 ISSN: 0722-9003

## Beschreibung

Die Erfindung betrifft einen. Lichtwellenleiter nach dem Oberbegriff des Patentanspruchs 1.

Lichtwellenleiter sind in der Nachrichtentechnik grundsätzlich bekannt und werden im großen Umfang eingesetzt. Stecker mit einem Lichtwellenleiter, zwei Lichtwellenleitern, zum Beispiel zur Hausverkabelung oder EDV-Verkabelung oder mit vier bis vierundzwanzig Lichtwellenleitern, werden sowohl zur Daten- und Informationsübertragung als auch zur Bildübertragung und Sprachübertragung verwendet. Die optischen Steckverbindungen sind prinzipiell wie folgt aufgebaut: Der Lichtwellenleiter mit einem typischen Außendurchmesser von 125 µm wird im Zentrum eines Stiftes aus Hartmetall oder Keramik fixiert, wobei der Stiftdurchmesser 2,5 mm oder 1,25 mm beträgt. An der Stirnfläche des Stiftes ragt die zu einer Kugelkalotte polierte Endfläche des Lichtwellenleiters etwas hervor. Die Stifte werden über eine zylindrische Hülse mit hoher Präzision zusammengesteckt, sodass der Versatz der Faserkerne weniger als 1 µm beträgt. Das Stecken erfolgt mit einem kleinen Andruck, wodurch die Kugelkalotten in der Mitte abgeflacht werden. Es entsteht bei sauberen Endflächen ein optischer Kontakt mit geringem Einfügeverlust und sehr kleiner Rückreflexion. In T. Shintaku et al. "Highly Stable Physical-Contact Optical Fiber Connectors with Spherical Convex Ends", Journal of Lightwave Technology 11,2(1993)241, ist eine ausführliche Beschreibung der Grundlagen und der Herstellung für optische Steckverbindungen veröffentlicht.

Typische Daten und Ausführungsformen optischer Steckverbindungen für einen Lichtwellenleiter sind im Prospekt der Schweizer Firma Diamond "Lichtwellenleiter Komponenten 002-037-104P007 (1995)" beschrieben und zusammengestellt. Danach beträgt die Einfügedämpfung, neuer, sauberer Steckverbindungen für Einmodenfasern 0,2 dB bis 0,4 dB. Die Lebensdauer wird mit 1000 Steckungen angegeben, das heißt die Einfügedämpfung sollte bei 1000 Steckungen unter sauberen Bedingungen der Oberflächen und der Umgebung nicht mehr als 0,2 dB zunehmen. In der Praxis ergeben sich jedoch für die Einfügedämpfung von bekannten optischen Steckverbindungen wesentlich höhere Werte. Bei Dämpfungsmessungen im Betriebsnetz der DTAG wurden Steckerdämpfungen zwischen 0,3 dB und 0,9 dB ermittelt, wie aus folgenden Druckschriften hervorgeht: W. Heitmann und H. Gruhl: "Dämpfungsmessungen an der optischen Kabelstrecke München-Passau-Schärding (Österreich), 15.02.1996",
H. Gruhl: "Dämpfungsmessungen an der Telekom-LWL-Trasse München-Passau-Schärding/ Projekt Photon, Bitestbett, 27.11.1996" und H. Gruhl: "Experimentierschleife vom Labor 801 Gebäude 53 TZ über Rödermark 10, 30.12.1996", wobei im Netz der Österreichischen Telekom sogar Werte bis zu 4 dB gemessen wurden.

Ursachen für die hohen Einfügedämpfungen von optischen Steckverbindungen sind meistens Verschmutzung oder Beschädigung des Kontaktbereiches zwischen den Faserendflächen, wodurch die hohe Einfügedämpfung entsteht. Die Meßergebnisse der Anlagen entsprechend den letztgenannten drei Veröffentlichungen beziehen sich auf Standard-Einmodenlichtwellenleiter, einen Fasertyp, der fast ausschließlich in den Netzen der TelekomGesellschaften eingesetzt wird. Der Modenfelddurchmesser, das ist der Durchmesser, in dem der überwiegende Teil der Strahlungsleistung im Lichtwellenleiter und damit auch in der Kontaktfläche geführt wird, beträgt etwa 10 µm. Geringfügige Verschmutzungen der Kontaktfläche können die Einfügedämpfung beträchtlich erhöhen. Während Schmutzschichten durch eine Reinigung der Endflächen beseitigt werden können, ist das bei Kratzern nicht mehr möglich. Kratzer entstehen zum Beispiel dadurch, daß beim Stecken in einer staubigen Umgebung ein Staubkorn auf die Kontaktfläche gelangt, das beim Zusammenpressen der Kugelkalotten die Oberflächen beschädigt. Solche Schäden sind bisher relativ selten, weil die Betriebsnetze von geschultem Personal betreut werden und weil relativ selten umgesteckt wird. Bei lokalen Netzen, Gebäudeinstallationen und Verbindungen von EDV-Anlagen werden auf kurzen Strecken viele Steckverbindungen benötigt, die außerdem häufig umgesteckt werden müssen. Außerdem erfolgt das Umstecken meistens durch ungeschultes Personal, sodass bei zum Beispiel zehn Steckverbindungen dann leicht Zusatzdämpfungen entstehen können, die zur Unterbrechung der Verbindung führen.

Der Erfindung liegt deshalb die Aufgabe zugrunde, die Langzeitstabilität optischer Steckverbindungen zu erhöhen, hohe Einfügedämpfungen zu vermeiden und das mehrmalige Umstecken auch durch ungeschultes Personal ohne nachteilige Folgen zu ermöglichen.

Die Lösung der Aufgabe ist im Kennzeichen des Patentanspruchs 1 charakterisiert.

Konkrete Ausgestaltungen der Erfindung ergeben sich aus den kennzeichnenden Merkmalen der Patentansprüche 2 bis 7.

Dadurch, dass die Glasfaserendflächen mit einer dünnen, absorptionsfreien Schicht aus sehr hartem Material beschichtet sind, erhöht sich die Kratzfestigkeit der Lichtwellenleiter beträchtlich. Die Dicke der Schutzschicht wird dabei so gering bemessen, dass störende Reflexionsverluste durch Brechzahlunterschiede weitgehend vermieden werden. Aus dem Buch von F. Kohlrausch: "Praktische Physik, Teubner Verlag Stuttgart, 22. Auflage (1968)23" geht hervor, dass zum Beispiel Al₂O₃ (Korund) eine Knoop-Härte von 1800 hat, sodass ein Sandkorn aus Quarzglas eine Oberfläche aus diesem Material nicht zerkratzen kann. Da die aufgebrachte Schicht sehr dünn ist, reagiert das Licht darauf praktisch nicht, sodass Reflexionen der Grenzflächen fast unverändert bleiben. Die Herstellung der Schutzschichten bzw. das Auftragen kann durch ionengestützte Verfahren, Ionenstrahl-Zerstäuben oder durch MikroPlasma-Verfahren erfolgen. Dabei ist es möglich, die Lichtwellenleiter vorher in die Steckerstifte einzubauen und die Kugelkalotten an die Endflächen anzupolieren. Wegen des geringen Durchmessers der Stifte kann eine große Anzahl gleichzeitig in die jeweilige Beschichtungsanlage eingesetzt und beschichtet werden. Die Beschichtungsdauer ist wegen der geringen Dicke der Schutzschicht relativ kurz. Die rückwärtigen Faserenden können dann mit den Lichtwellenleiteradern durch einen Spleiß verbunden werden.

Die Erfindung wird nun anhand eines Ausführungsbeispiels näher erklärt.

Die Faserendflächen der Lichtwellenleiter werden mit einer dünnen, absorptionsfreien Schicht aus sehr hartem Material beschichtet, wodurch die Kratzfestigkeit wesentlich erhöht wird. Die Dicke der Schutzschicht wird so gering bemessen, dass störende Reflexionsverluste durch Brechzahlunterschiede weitgehend vermieden werden. Der entscheidende Faktor für die Widerstandsfähigkeit eines Materials gegen Oberflächenbeschädigung ist seine Härte. Lichtwellenleiter bestehen meistens aus Quarzglas, das zwar ein mechanisch relativ stabiles Glas ist, seine Härte wird jedoch von vielen Stoffen übertroffen, sodass es bei der Verwendung in optischen Steckverbindungen mit der Zeit zerkratzt wird. Bei einer Untersuchung, die in der Veröffentlichung von Y. Taga: "Recent progress of optical thin films in the automobile industry, Applied Optics 32,28(1993)5519", die sich mit der Stabilität von beschichteten Oberflächen von Autoglasscheiben beschäftigt, wurde festgestellt, dass Al₂O₃-Schichten mit einer Dicke von 8 nm ausreichen, um die Kratzfestigkeit von Glasoberflächen ganz wesentlich zu erhöhen. Die Härte von Quarzglas wird nach Knoop mit 820 angegeben, während der Wert für Al₂O₃ (Korund) 1800 beträgt, wie aus dem Buch von F. Kohlrausch "Praktische Physik", Teubner Verlag Stuttgart, 22. Auflage (1968)23, hervorgeht. Demnach kann ein Sandkorn aus Quarzglas eine Al₂O₃-Schicht, die auf eine Glasoberfläche aufgebracht worden ist, nicht zerkratzen. Die optische Dicke der Schutzschicht, das heißt das Produkt der Brechzahl n und der geometrischen Dicke d der Schicht, muss klein sein gegen ein 1/4 der Wellenlänge λ, die für die Übertragung genutzt wird. Bei einer optischen Dicke von λ/4 erreicht die Reflexion einen Maximalwert, wenn die Brechzahl der Schutzschicht größer als die vom Quarzglas ist. Die Brechzahlen von Quarzglas und Al₂O₃ betragen etwa 1,45 bzw. 1,7. Danach entsprechen 8 nm geometrische Dicke der Al₂O₃-Schicht einer optischen Dicke von ca. 14 nm. Die Betriebswellenlänge optischer Nachrichtensyteme liegen bei 1300 nm und darüber. Daraus ergibt sich für eine λ/4-Schicht eine optische Dicke von mindestens 325 nm. Bei einer optischen Schutzschicht mit einer Dicke von 14 nm bzw. wenn sich beim Kontakt der Endflächen die optische Dicke der Schutzschichten zu 28 nm addiert, liegt eine solche Anordnung immer noch unter 10 Prozent der optischen Dicke der λ/4-Schicht. Das Licht reagiert auf diese dünne Beschichtung praktisch nicht, sodass die Reflexion der Grenzfläche fast unverändert bleibt. Eine kleine Reflexionserhöhung bis zu etwa 0,3 dB würde jedoch noch im zulässigen Grenzbereich liegen, wenn dadurch eine langfristige Stabilität der Steckerendflächen, wie im vorliegenden Fall, erreicht wird. Die dann auftretende Rückreflexion kann durch eine leichte Schrägstellung der Kugelkalotten auf ausreichend geringe Werte reduziert werden.

Als Materialien für die aufzubringende Schutzschicht kommen neben Al₂O₃ alle absorptionsfreien Stoffe mit noch größerer Härte in Frage. Geeignete Oxide sind unter anderem Y₂O₃, Sc₂O₃, ZrO₂ und HfO₂ wie aus der Veröffentlichung von N. Kaiser: "Dünne Schichten für den ultravioletten Spektralbereich", Laser und Optoelektronik 28,2(1996)52, hervorgeht. In der Veröffentlichung von F. Richter: "Superharte dünne Schichten", Physikalische Blätter 52,4 (1996)355" werden eine Anzahl von Substanzen angegeben, wie zum Beispiel Nitride, Boride und Carbide aufgeführt, deren Härte zwischen der von Al₂O₃ und der von Diamant liegt.

Zur Herstellung der Schutzschichten können unter anderem ionengestützte Verfahren, wie in den beiden letztgenannten Veröffentlichungen beschrieben, IonenstrahlZerstäubungsverfahren, wie in der Veröffentlichung von R. Henking et al.: "Ionentrahl-Zerstäuben: Ein Beschichtungsverfahren für Laserkomponenten der Zukunft", Laser und Optoelektronik 28,2(1996)43, oder das MikroPlasma-Verfahren gemäß der Veröffentlichung von M.A. Scobey et al.: "Passive DWDM components using MicroPlasma optical interference filters", Optical Fiber Conference OFC 1996, Thk 1, Seite 242 bis 243, eingesetzt werden. Zweckmäßig ist es dabei, die Lichtwellenleiter vorher in die Steckerstifte einzubauen und die Kugelkalotten an die Endflächen anzupolieren. Wegen des geringen Durchmessers von 2,5 mm bzw. 1,25 mm der Stifte kann eine große Anzahl gleichzeitig in die Beschichtungsanlage eingesetzt und beschichtet werden. Die erforderliche Beschichtungsdauer ist wegen der geringen Dicke der Schutzschicht relativ kurz. Die rückwärtigen Faserenden können dann mit den Lichtwellleiter-Adern durch einen Spleiß verbunden werden. Übliche Werte für die Spleißdämpfung liegen heute bei 0,05 dB.

## Patentansprüche

1. Optischer lichtwellenleiter mit Endflächenkontakt, der mit einer Schutzschicht versehen ist, **dadurch gekennzeichnet, dass** die Endflächen der Lichtwellenleiter mit einer dünnen, absorptionsfreien Schutzschicht mit einer Härte versehen sind, die größer ist als die des Lichtwellenleitermaterials und deren optische Dicke zwischen 1/1000 und 1/10 gegenüber der optischen Betriebswellenlänge des Lichtwellenleiters liegt.

2. Lichtwellenleiter nach Patentanspruch 1, **gekennzeichnet durch** eine Ausbildung aus Quarzglas, wobei die Schutzschicht Korund (Al₂O₃) umfasst.

3. Lichtwellenleiter nach Patentanspruch 1, **gekennzeichnet durch** eine Ausbildung aus Quarzglas, wobei die Schutzschicht Oxide, Nitride, Boride oder Carbide umfasst.

4. Lichtwellenleiter nach einem der vorangehenden Ansprüche, **gekennzeichnet durch** eine Ausbildung aus Mehrkomponentengläsern oder Kunststoff, wobei die Schutzschicht ein absorptionsfreies, anorganisches oder organisches Material größerer Härte umfasst.

5. Lichtwellenleiter nach einem der Patentansprüche 1 bis 4, **dadurch gekennzeichnet, dass** die Faserendflächen mit einer dünnen, absorptionsfreien Schutzschicht aus sehr hartem Material beschichtet sind, wobei die Dicke der Schutzschicht zur Vermeidung störender Reflexionsverluste durch Brechzahlunterschiede entsprechend gering bemessen ist.

6. Lichtwellenleiter nach den Patentansprüchen 1 oder 2, **dadurch gekennzeichnet, dass** die Schutzschicht aus Oxiden, wie zum Beispiel Y₂O₃, Sc₂O₃, ZrO₂ und HfO₂ besteht.

7. Lichtwellenleiter nach einem der Patentansprüche 1 bis 6, **dadurch gekennzeichnet, dass** zur Herstellung der Schutzschichten ionengestützte Verfahren oder Ionenstrahl-Zerstäubungsverfahren oder MikroPlasma-Verfahren angewendet werden.

## Claims

1. Optical waveguide with end face contact provided with a protective coating, **characterized in that** the end faces of the waveguides are provided with a thin, nonabsorptive protective coating with a hardness greater than the hardness of the waveguide material, said coating having an optical thickness between 1/1000 and 1/10 of the optical operating wavelength of the waveguide.

2. Waveguide according to claim 1, **characterized in that** said waveguide is formed of silica glass, the protective coating comprising corundum (Al₂O₃).

3. Waveguide according to claim 1, **characterized in that** said waveguide is formed of silica glass, the protective coating comprising oxides, nitrides, borides or carbides.

4. Waveguide according to any one of the preceding claims, **characterized in that** said waveguide is formed of multicomponent glasses or plastic, the protective coating comprising a nonabsorptive inorganic or organic material of greater hardness.

5. Waveguide according to any one of claims 1 through 4, **characterized in that** the fiber end faces are coated with a thin, nonabsorptive protective coating of very hard material, the thickness of the protective layer being suitably small in order to avoid undesirable reflection losses resulting from differences in refractive index.

6. Waveguide according to claims 1 or 2, **characterized in that** the protective coating consists of oxides, as for example Y₂O₃, SC₂O₃, ZrO₂, or HfO₂.

7. Waveguide according to any one of claims 1 through 6, **characterized in that** ion-assisted processes or ion-beam sputtering processes or microplasma processes are used to produce the protective coatings.

## Revendications

1. Guide d'onde optique avec contact en surface terminale, doté d'une couche protectrice, **caractérisé en ce que** les surfaces terminales des guides d'onde lumineuse sont munies d'une mince couche protectrice non absorbante d'une dureté supérieure à celle du matériau du guide d'onde lumineuse et dont l'épaisseur optique est comprise entre 1/1000 et 1/10 de la longueur d'onde optique opérationnelle du guide d'onde lumineuse

2. Guide d'onde optique selon la revendication 1, **caractérisé en ce qu'**il est constitué d'un matériau de verre quartzeux, la couche protectrice comprenant du corindon (Al₂O₃) .

3. Guide d'onde optique selon la revendication 1, **caractérisé en ce qu'**il est constitué d'un matériau de verre quartzeux, la couche protectrice comprenant des oxydes, des nitrures, des borures ou des carbures.

4. Guide d'onde optique selon l'une des revendications précédentes, **caractérisé en ce qu'**il est constitué de verres à plusieurs constituants ou de matière plastique, la couche protectrice comprenant un matériau inorganique ou organique non absorbant de dureté supérieure.

5. Guide d'onde optique selon l'une des revendications 1 à 4, **caractérisé en ce que** les surfaces terminales de la fibre sont recouvertes d'une mince couche protectrice non absorbante d'un matériau très dur, l'épaisseur de la couche protectrice étant de dimension réduite afin d'éviter des pertes par réflexion gênantes dues à des différences d'indice de réfraction.

6. Guide d'onde optique selon l'une des revendications 1 ou 2, **caractérisé en ce que** la couche protectrice est constituée d'oxydes, comme par exemple Y₂O₃, Sc₂O₃, ZrO₂ et HfO₂.

7. Guide d'onde optique selon l'une des revendications 1 à 6, **caractérisé en ce que** les couches protectrices sont produites sur la base de procédés ioniques, de procédés de pulvérisation par faisceau ionique ou de procédés microplasma.
